# EUROPÄISCHE PATENTSCHRIFT

(11) **EP 3 390 881 B1**
(45) Veröffentlichungstag und Bekanntmachung des Hinweises auf die Patenterteilung: **09.08.2023**
(21) Anmeldenummer: 16793918.0
(22) Anmeldetag: 10.11.2016
(51) Int. Cl.: F16L 19/028

(54) **ROHRLEITUNG UND ROHRVERBINDUNG**
PIPE AND PIPE COUPLING
CONDUITE TUBULAIRE ET RACCORD TUBULAIRE

(30) Priorität: 18.12.2015 DE 102015122309
(43) Veröffentlichungstag der Anmeldung: 24.10.2018
(73) Patentinhaber: VOSS Fluid GmbH, 51688 Wipperfürth (DE)
(72) Erfinder: BERGHAUS, Gerd, 51515 Kürten (DE); POTT, Harald, 42499 Hückeswagen (DE); ERBE, Alexander, 42499 Hückeswagen (DE)
(74) Vertreter: Dr. Solf & Zapf Patent- und Rechtsanwalts PartG mbB
(86) Internationale Anmeldenummer: PCT/EP2016/077301
(87) Internationale Veröffentlichungsnummer: WO 2017/102190

(56) Entgegenhaltungen:
- DE-A1- 19 958 475
- DE-A1-102013 105 300
- DE-T2- 69 426 302
- DE-U1- 29 908 670

## Beschreibung

Die vorliegende Erfindung betrifft eine Rohrleitung und eine Rohrverbindung zum Anschluss einer Rohrleitung, insbesondere zur Herstellung einer dichtenden Verbindung. Die Rohrverbindung umfasst eine Rohrleitung, einen Anschlussstutzen und ein Spannelement. Die Rohrleitung weist mindestens einen Verbindungsabschnitt und eine endseitige Stirnfläche auf, wobei der Verbindungsabschnitt in einem Endbereich der Rohrleitung ausgebildet ist. Der Verbindungsabschnitt umfasst ferner mindestens eine in Richtung des Endbereichs geneigte Dichtfläche. Der Anschlussstutzen der Rohrverbindung verfügt über einen Aufnahmeabschnitt zur Aufnahme zumindest eines Teils des Verbindungsabschnitts der Rohrleitung. Eine dichtende Verbindung zwischen der Rohrleitung und dem Anschlussstutzen ist mit dem Spannelement herstellbar, indem der Verbindungsabschnitt zwischen dem Anschlussstutzen und dem Spannelement eingespannt wird. Ferner betrifft die Erfindung ein Stauchwerkzeug zur Herstellung eines Verbindungsabschnitts an einer Rohrleitung sowie ein Verfahren zur Herstellung eines Verbindungsabschnitts an einer Rohrleitung.

Gattungsgemäße Rohrverbindungen sind im Stand der Technik in einer Vielzahl von Ausgestaltungen bekannt. Derartige Rohrverbindungen kommen in vielen technischen Gebieten zur Anwendung, nämlich immer dann, wenn beispielsweise Rohrleitungen zum Führen von Fluiden unter hohen Drücken, z. B. von Drücken bis zu 80 MPa, verbunden oder angeschlossen werden müssen. Solche Anwendungen finden sich unter anderem in der Automobilindustrie, in der Verfahrenstechnik sowie in der Chemieindustrie. Eine gattungsgemäße Rohrverbindung ist beispielsweise aus der DE 10 2013 105 300 A1 bekannt.

Ferner offenbart DE 299 08 670 U1 eine Rohrverschraubung zum Anschluss einer metallischen Rohrleitung. Das Rohr wird mit einer Überwurfmutter in ein Verschraubungsteil eingepresst. Zwischen dem Rohr und dem Verschraubungsteil ist eine Dichtung in einer Dichtungskammer angeordnet.

DE 10 2013 105 300 A1 offenbart eine Rohrverbindung für dünnwandige metallische Rohre, bei der das Rohr zwischen einer Überwurfmutter und einem Verschraubungsteil eingespannt wird. Das Rohr weist endseitig einen Verbindungsbereich auf, der mit einer Dichtung zusammenwirkt.

DE 694 26 302 T2 offenbart eine Montagevorrichtung für Fluidleitungen. Die Rohrleitung weist einen ringförmigen Wulst auf, der bei der Montage verspannt wird, um eine Dichtwirkung zu realisieren.

DE 199 58 475 A1 offenbart eine Rohrverbindung und ein Verfahren zur Herstellung einer Rohrverbindung. Die Rohrverbindung umfasst einen Verschraubungskörper, in den ein Rohr einbringbar ist. Zwischen dem Rohr und dem Verschraubungskörper sind ein Stützring und ein zugehöriger Dichtring angeordnet, die sich an einer Anschlagfläche, die durch Verformung des Rohres gebildet ist, abstützen.

Bei gattungsgemäßen Rohrverbindungen, bei denen die Dichtwirkung üblicherweise durch das Aneinanderpressen von metallischen Flächen erreicht wird, kann auf die Zwischenlage von separaten Dichtungen oder auf Schneidringe verzichtet werden, weshalb derartige Rohrverbindungen insbesondere für Fluidleitungen geeignet sind, in denen aggressive oder korrosive Fluide geführt werden.

Insbesondere bei der Förderung von aggressiven Fluiden werden aus Gründen der Betriebssicherheit sehr hohe Anforderungen an die Dichtheit von Rohrverbindungen gestellt.

Der vorliegenden Erfindung liegt deshalb die Aufgabe zugrunde, eine Rohrleitung, eine Rohrverbindung sowie ein Werkzeug zur Bearbeitung einer Rohrleitung und ein Verfahren zur Bearbeitung einer Rohrleitung anzugeben, mit denen eine Rohrverbindung zur Verfügung gestellt werden kann, die eine verbesserte Dichtwirkung gewährleistet.

Bei einer gattungsgemäßen Rohrleitung und bei einer Rohrverbindung ist die vorgenannte Aufgabe dadurch gelöst, dass die Stirnfläche der Rohleitung mindestens einen Dichtvorsprung aufweist, und dass der Dichtvorsprung als Erhebung, insbesondere als mindestens eine lokale Erhebung, in der Stirnfläche ausgebildet ist.

Die vorliegende Rohrverbindung dient dem Anschluss einer Rohrleitung, insbesondere dem Verbinden des Strömungsquerschnitts der Rohrleitung mit einem Strömungsquerschnitt des Anschlussstutzens. Die Rohrleitung wird im Montagezustand der Rohrverbindung durch das Spannelement mit ihrem Verbindungsabschnitt gegen einen Anschlussstutzen, insbesondere zumindest teilweise in den Aufnahmeabschnitt des Anschlussstutzens, gespannt. Vorzugsweise weist der Anschlussstutzen ein Außengewinde, und das Spannelement ein korrespondierendes Innengewinde auf, so dass die Rohrleitung und der Anschlussstutzen miteinander verbunden werden können, indem das Spannelement unter Zwischenlage des Verbindungsabschnitts der Rohrleitung auf den Anschlussstutzen geschraubt wird. Der Verbindungsabschnitt der Rohrleitung weist bevorzugt eine Spannschulter auf, an der sich das Spannelement abstützt, wodurch eine Kraft auf die Rohrleitung parallel zur Längsachse der Rohrleitung ausgeübt wird.

Durch die Spannkraft zwischen Spannelement und Anschlussstutzen wird eine dichtende Verbindung, insbesondere eine metallisch dichtende Verbindung, zwischen der Rohrleitung und dem Anschlussstutzen hergestellt. Die Rohrleitung weist zur Herstellung der Verbindung mindestens einen Verbindungsabschnitt in mindestens einem ihrer Endbereiche auf. Es ist auch vorgesehen, dass die Rohrleitung in beiden ihrer Endbereiche einen Verbindungsbereich aufweist. Der Verbindungsbereich weist mindestens eine in Richtung des jeweiligen Endes der Rohrleitung geneigte Dichtfläche auf. Diese Dichtfläche wird im Montagezustand von dem im Anschlussstutzen ausgebildeten Aufnahmeabschnitt aufgenommen, wobei eine Dichtwirkung zwischen zumindest einem Teil der Dichtfläche und dem Aufnahmeabschnitt erzielt wird.

An der endseitigen Stirnfläche der Rohrleitung ist ein Dichtvorsprung vorgesehen, der als - lokale - Erhebung in der Stirnfläche ausgebildet ist. Mit der Stirnfläche der Rohrleitung ist insbesondere die endseitige, häufig kreisringförmige, Abschlussfläche der Rohrleitung gemeint, nämlich die Schnittfläche der Rohrleitungswand. Der Verbindungsabschnitt der Rohrleitung ist durch plastische Umformung der Rohrleitung hergestellt, so dass es sich bei der Stirnfläche folglich um die ursprüngliche Stirnfläche der unverformten Rohrleitung handelt. Vorzugsweise ist auch der Dichtvorsprung durch plastische Umformung der Rohrleitung im Verbindungsabschnitt ausgebildet.

Die Rohrleitung hat beispielweise einen Außendurchmesser zwischen 6 mm und 22 mm und eine Wandstärke zwischen 1 mm und 4 mm, wobei folgende Rohrgrößen beispielhaft genannt sind (Außendurchmesser x Wandstärke): 6x1, 8x1, 1 0x1, 12x1, 14x1,5, 15x1,5, 16x1,5, 18x1,5, 20x1,5, 22x1,5, 20x3,5, 22x3.

Insbesondere durch Herstellung des Verbindungsabschnitts an der Rohrleitung mittels plastischer Verformung kann die Stirnfläche zur Längsachse der Rohrleitung in einem Winkel abweichend von 90° geneigt sein, z. B. in einem Winkel zwischen 50° und 90°, insbesondere zwischen 65° und 75°, bevorzugt etwa 70°. Sofern die Stirnfläche eine Krümmung aufweist, ist vorzugsweise vorgesehen, dass die Tangenten an die Stirnfläche, mit Ausnahme im Bereich des Dichtvorsprungs, zwischen 50° und 90°, bzw. zwischen 65° und 75°, insbesondere etwa 70°, zur Längsachse der Rohrleitung geneigt sind.

Der Dichtvorsprung ist als Erhebung in der Stirnfläche ausgebildet, so dass der Dichtvorsprung aus der Stirnfläche hervorragt. Vorzugsweise ist der Dichtvorsprung als lokale Erhebung ausgebildet, folglich als Erhebung in einem Teil der Stirnfläche. Der Dichtvorsprung ist umlaufend, insbesondere rotationssymmetrisch, ausgebildet. Vorzugsweise ist vorgesehen, dass der Dichtvorsprung, insbesondere der Spitzenpunkt des Dichtvorsprungs im Querschnitt, auf einem größeren Radius in Bezug auf die Längsachse der Rohrleitung angeordnet ist, als der verbleibende Teil der Stirnfläche.

Es ist vorgesehen, dass der Dichtvorsprung in einem Randbereich der Stirnfläche ausgebildet ist, so dass mindestens eine seiner Flanken unmittelbar in die geneigte Dichtfläche des Verbindungsabschnitts übergeht. Der Dichtvorsprung ist insbesondere in einem radial außenliegenden Randbereich ausgebildet. Vorzugsweise weist der Dichtvorsprung eine im Querschnitt breite Basis auf und verjüngt sich mit zunehmender Höhe des Dichtvorsprungs. Im Querschnitt des Dichtvorsprungs nähern sich seine Flanken einander mit zunehmender Höhe an.

Durch den Dichtvorsprung wird das Anlageverhalten der Rohrleitung im Aufnahmeabschnitt des Anschlussstutzens verbessert, wodurch die Dichtwirkung gesteigert wird.

Als besonders vorteilhaft für die Dichtwirkung der Rohrverbindung hat sich herausgestellt, wenn gemäß einer ersten Ausgestaltung vorgesehen ist, dass die Dichtfläche der Rohrleitung einen ersten Abschnitt umfasst, der um einen Winkel α zur Längsachse der Rohrleitung geneigt ist, und dass die Dichtfläche einen sich in Richtung des Endbereichs an den ersten Abschnitt anschließenden zweiten Abschnitt umfasst, der zumindest einen Radius R1 aufweist. Der erste Abschnitt der Dichtfläche hat folglich die Umfangsfläche eines Kegelstumpfes und verjüngt sich in Richtung des Endbereichs der Rohrleitung - in Richtung der Stirnfläche. Im Montagezustand steht die Dichtfläche vorzugsweise zumindest teilweise mit einer korrespondierenden Gegendichtfläche am Aufnahmeabschnitt des Anschlussstutzens in Verbindung, wodurch die Dichtwirkung erzielt wird.

An den ersten Abschnitt der Dichtfläche schließt sich der zweite Abschnitt an, der vorteilhaft mit einem ersten Radius R1 gekrümmt ist. Der zweite Abschnitt ist bogenförmig ausgebildet und schließt sich an den ersten, kegelstumpfförmigen Abschnitt an. Ferner ist aber auch vorgesehen, dass sich der zweite Abschnitt aus einer Mehrzahl aufeinanderfolgender Radien zusammensetzt oder bogenförmig mit sich stetig änderndem Radius ausgebildet ist.

Vorzugsweise ist vorgesehen, dass mindestens eine Flanke des Dichtvorsprungs zumindest einen Teil des zweiten Abschnitts der Dichtfläche bildet. Das ist dann der Fall, wenn der Dichtvorsprung in einem Randbereich der Stirnfläche angeordnet ist. Der Radius R1 ist vorzugsweise < 5 mm, insbesondere < 3 mm, vorzugsweise beträgt der Radius R1 2 mm. Der Winkel α zur Längsachse der Rohrleitung beträgt beispielsweise zwischen 15° und 25°, insbesondere zwischen 18° und 22°, bevorzugt 19°.

Gemäß einer weiteren Ausgestaltung der Rohrverbindung ist vorzugsweise vorgesehen, dass der Dichtvorsprung eine erste Flanke und eine zweite Flanke aufweist, und dass sich die erste Flanke und die zweite Flanke in Richtung eines Spitzenpunkts des Dichtvorsprungs einander annähern. Der Dichtvorsprung läuft folglich im Querschnitt spitz zusammen.

Ferner ist vorgesehen, dass die erste Flanke und die zweite Flanke des Dichtvorsprungs in jeder Höhe einen Winkel ε < 120° einschließen, insbesondere < 75°, bevorzugt < 50°. Besonders bevorzugt ist am Spitzenpunkt ein Winkel ε zwischen 40° und 50°, insbesondere von 45°. Die erste Flanke nähert sich folglich unter dem Winkel ε der zweiten Flanke an, bevor die erste Flanke und die zweite Flanke am Spitzenpunkt des Dichtvorsprungs zusammentreffen.

Eine weitere Ausgestaltung der Rohrverbindung sieht vor, dass die erste Flanke zumindest einen Radius R2 und die zweite Flanke zumindest einen Radius R3 aufweist. Die erste Flanke und die zweite Flanke weisen in ihrem Querschnitt eine gekrümmte Kontur auf bzw. verlaufen bogenförmig. Vorzugsweise ist vorgesehen, dass die Krümmung der ersten Flanke entgegengesetzt zur Krümmung der zweiten Flanke verläuft. Bevorzugt ist ferner vorgesehen, dass sich die erste Flanke unmittelbar an die Dichtfläche anschließt, so dass die erste Flanke des Dichtvorsprungs einen Teil der Dichtfläche, insbesondere des zweiten Abschnitts, bildet. Die erste Flanke geht vorteilhaft stetig in die Dichtfläche über. Insbesondere bildet die erste Flanke des Dichtvorsprungs den zweiten Abschnitt der Dichtfläche. Vorzugsweise ist der Radius R1 des zweiten Abschnitts der Dichtfläche identisch mit dem Radius R2 der ersten Flanke. Beispielsweise ist der Radius R2 < 5 mm, vorzugsweise < 3 mm, besonders bevorzugt beträgt der Radius R2 2 mm.

Die zweite Flanke des Dichtvorsprungs ist vorzugsweise nach innen - konkav - gewölbt und geht in einem stetigen Verlauf in die Stirnfläche über. Insbesondere ist die zweite Flanke mit einem Radius R3 gekrümmt, der insbesondere < 1,8 mm, bevorzugt < 1,2 mm ist, besonders bevorzugt 0,6 mm beträgt.

Vorzugsweise ist vorgesehen, dass die erste Flanke konvex, also nach außen gewölbt, und/oder die zweite Flanke konkav, also nach innen gewölbt, ausgebildet ist. Durch derartig geformte Flanken werden die Dichteigenschaften des Dichtvorsprungs vorteilhaft beeinflusst.

Die erste Flanke und die zweite Flanke treffen insbesondere an einem Spitzenpunkt des Dichtvorsprungs aufeinander, so dass die erste Flanke an dem Spitzenpunkt in die zweite Flanke übergeht. Sofern die erste Flanke und die zweite Flanke gekrümmt sind und/oder einen Radius aufweisen, liegt der Spitzenpunkt an der Stelle, an dem sich die erste Flanke und die zweite Flanke ggf. in gedachter Verlängerung schneiden. Aus fertigungstechnischen Gründen entspricht die tatsächliche Spitze des Dichtvorsprungs an der Rohrleitung nur näherungsweise dem exakten mathematischen Schnittpunkt der beiden Flanken. Während der Umformung fließt das Material der Rohrleitung nicht exakt bis zu dem Tiefpunkt der Vertiefung im Stauchwerkzeug, so dass an der Spitze des Dichtvorsprungs an der Rohrleitung stets eine, wenn auch sehr kleine, Rundung ausgebildet ist. Beispielsweise kann hier ein Radius zwischen 0,1 mm und 0,3 mm zwischen der ersten Flanke und der zweiten Flanke ausgebildet sein.

Als Spitzenpunkt des Dichtvorsprungs gilt aber stets der Schnittpunkt der - gedachten - Verlängerung der ersten Flanke und der zweiten Flanke. Wenn die erste Flanke und die zweite Flanke einen Radius aufweisen handelt es sich um den Schnittpunkt der gedachten Verlängerung der ersten Flanke und der zweiten Flanke mit dem entsprechenden Radius.

Bei Ausführungsbeispielen, bei denen die erste Flanke und die zweite Flanke eine Krümmung, also beispielsweise einen Radius R2 bzw. einen Radius R3 aufweisen, wird der Winkel ε zwischen der ersten Flanke und der zweiten Flanke als Winkel zwischen den Tangenten an die erste Flanke und die zweite Flanke in der entsprechenden Höhe des Dichtvorsprungs bestimmt. Vorzugsweise sind die erste Flanke und die zweite Flanke derart gekrümmt, dass die Tangenten an die erste Flanke und an die zweite Flanke in jeder Höhe des Dichtvorsprungs einen Winkel ≤ 120° einschließen. Vorzugsweise schließen alle Tangenten an die erste Flanke und an die zweite Flanke in jeder Höhe zwischen 1/3 der Höhe des Dichtvorsprungs und 2/3 der Höhe des Dichtvorsprungs einen Winkel im Bereich zwischen 46° und 79°, insbesondere zwischen 56° und 69° ein.

Besonders bevorzugt schließen die Tangente an die erste Flanke und die Tangente an die zweite Flanke im Spitzenpunkt des Dichtvorsprungs einen Winkel zwischen 40° und 50° ein, insbesondere einen Winkel von 45°. Dabei gilt als Spitzenpunkt stets der Schnittpunkt der ggf. gedachten Verlängerung der ersten Flanke und der zweiten Flanke.

Die Höhe und die Breite des Dichtvorsprungs wird im Querschnitt der Rohrleitung beispielsweise ausgehend von einer Ebene E bestimmt, wobei eine Normale N1 zur Ebene E im Querschnitt parallel zur Dichtfläche, insbesondere parallel zu dem geneigten ersten Abschnitt der Dichtfläche, verläuft. Ferner liegt die Kante zwischen der Stirnfläche und dem Innenumfang der Rohrleitung in dieser Ebene. Vorzugsweise liegt der Teil der Stirnfläche ohne den Dichtvorsprung in der Ebene E. Die Breite des Dichtvorsprungs wird dann als Länge der Erstreckung des Dichtvorsprungs in der Ebene E bestimmt. Die Höhe des Dichtvorsprungs wird bestimmt als Länge der Erstreckung entlang einer Normalen N2 zur Ebene E, die im Querschnitt den Spitzenpunkt schneidet. Die Höhe des Dichtvorsprungs wird also stets im Querschnitt als der Abstand einer zur Ebene E parallelen Ebene von der Ebene E bestimmt. Die vollständige Höhe des Dichtvorsprungs ist folglich die Länge der Normalen N2 zur Ebene E zwischen der Ebene E und dem Spitzenpunkt des Dichtvorsprungs. Die Breite des Dichtvorsprungs an seiner Basis ist die Erstreckung des Dichtvorsprungs im Querschnitt in der Ebene E.

Gemäß einer weiteren Ausgestaltung hat sich für die Dichtwirkung als vorteilhaft herausgestellt, wenn vorgesehen ist, dass die Breite des Dichtvorsprungs zwischen 15% und 75%, insbesondere zwischen 18% und 72%, der Rohrleitungswandstärke beträgt.

Vorzugsweise weist der Dichtvorsprung eine Höhe zwischen 0,3 mm und 0,5 mm und/oder eine Breite an der Basis zwischen 0,5 mm und 0,9 mm auf. Besonders bevorzugt ist eine Höhe zwischen 0,34 mm und 0,44 mm. Ferner ist bevorzugt eine Breite zwischen 0,67 mm und 0,77 mm.

Als vorteilhaft hat sich zudem herausgestellt, wenn gemäß einer weiteren Ausgestaltung vorgesehen ist, dass der Dichtvorsprung durch plastische Umformung der Rohrleitung hergestellt ist, insbesondere durch Krafteinwirkung auf die Stirnfläche und die Dichtfläche, folglich die Außenumfangsfläche, der Rohrleitung.

Beispielsweise wird der Verbindungsabschnitt an der Rohrleitung mittels axialem Stauchen in einer Matrize hergestellt. Die Rohrleitung wird dazu in einen Gegenhalter eingespannt, wobei anschließend eine Relativbewegung zwischen einer Matrize und dem Gegenhalter erfolgt, so dass der Endbereich der Rohrleitung zwischen der Matrize und dem Gegenhalter zu einem Verbindungsabschnitt geformt wird. Dabei ist die Matrize derart ausgebildet, dass sie zumindest eine Kraft auf die Stirnfläche und die Dichtfläche, also den Außenumfang, der Rohrleitung bewirkt. Durch die Kraft der Matrize auf die Stirnfläche wird die Stirnfläche zumindest teilweise in Richtung des Außenumfangs der Rohrleitung gedrängt, wodurch der Dichtvorsprung ausgebildet wird.

Für die Dichtwirkung hat sich zudem als vorteilhaft herausgestellt, wenn gemäß einer weiteren Ausgestaltung vorgesehen ist, dass die Dichtfläche mindestens einen Glattbereich aufweist, wobei die Oberflächenrauheit des Glattbereichs geringer als die Oberflächenrauheit in mindestens einem anderen, an den Glattbereich angrenzenden Bereich der Dichtfläche ausgebildet ist. Vorzugsweise wird die Oberflächenrauheit als arithmetischer Mittenrauwert Ra gemäß DIN EN ISO 4287 (Ausgabedatum: 2010-07) und DIN EN ISO 4288 (Ausgabedatum: 1998-04) bestimmt.

Insbesondere wird der Glattbereich bei der Umformung der Rohrleitung, nämlich bei der Herstellung des Dichtbereichs, ausgebildet, indem eine Kraft auf die Stirnfläche der Rohrleitung und die Dichtfläche wirkt. Vorzugsweise ist die Kraft auf die Stirnfläche zumindest teilweise in Richtung der Dichtfläche gerichtet, so dass der Glattbereich durch eine hohe Flächenpressung während des Umformvorgangs gebildet wird. Dabei ist vorgesehen, dass während der Umformung zumindest auf einen Teil der Dichtfläche, insbesondere im späteren Glattbereich, Kontaktdrücke von etwa 1.000 MPa wirken.

Durch diese sehr hohen Kontaktdrücke wird die Dichtfläche lokal geglättet, so dass der Glattbereich entsteht, in dem die Oberflächenrauheit, insbesondere der arithmetische Mittenrauwert Ra, gegenüber den verbleibenden Bereichen der Dichtfläche deutlich reduziert ist.

Es ist zudem gemäß einer weiteren Ausgestaltung vorgesehen, dass die Oberflächenrauheit anhand eines arithmetischen Mittenrauwerts Ra und der Profiltiefe Pt bestimmt wird. Dabei ist Pt die Gesamthöhe des Profils und damit die Summe aus der Höhe der größten Profilspitze und der Tiefe des größten Profiltales innerhalb der Messstrecke. Durch die Profiltiefe werden beispielsweise häufig in der Rohrleitung vorhandene Kratzer oder Riefen gekennzeichnet. Übliche Längsriefen haben eine Tiefe bis zu 10 µm und können im Glattbereich durch die Umformung nahezu vollständig eliminiert werden.

Durch die Umformung erfolgt eine derartige Krafteinwirkung im Glattbereich, dass der arithmetische Mittenrauwert Ra und die Profiltiefe Pt im Bezug auf die Ausgangswerte im Glattbereich um mindestens 50%, insbesondere um mindestens 75%, reduziert werden. Beispielsweise beträgt der arithmetische Mittenrauwert Ra und die Profiltiefe Pt für handelsübliche Präzisionsrohre Ra 4 und Pt 10. Nach der Umformung betragen der arithmetische Mittenrauwert Ra und die Profiltiefe Pt im Glattbereich Ra 2 und Pt 5 bzw. Ra 1 und Pt 2,5.

Durch den Glattbereich der Dichtfläche, der umlaufend an dem Verbindungsabschnitt ausgebildet ist, insbesondere nämlich im zweiten Abschnitt der Dichtfläche, wird die Dichtwirkung der Rohrverbindung verbessert, weil durch die bei der Umformung einwirkende Kraft Unebenheiten, insbesondere herstellungsbedingte Längsriefen, in der Rohroberfläche entfernt werden. Bevorzugt liegt der Verbindungsabschnitt im Montagezustand zumindest mit dem Glattbereich der Dichtfläche an dem Aufnahmeabschnitt im Anschlussstutzen an. Insbesondere ist der Glattbereich zumindest teilweise auf der ersten Flanke des Dichtvorsprungs angeordnet. Besonders bevorzugt erstreckt sich der Glattbereich vollständig auf der ersten Flanke des Dichtvorsprungs.

Die Dichtwirkung der Rohrverbindung wird gemäß einem weiteren Ausführungsbeispiel dadurch verbessert, dass vorgesehen ist, dass der Anschlussstutzen eine Gegendichtfläche aufweist, dass die Gegendichtfläche einen kegelstumpfförmig um den Winkel β geneigten ersten Abschnitt aufweist, dass die Gegendichtfläche mindestens einen zweiten Abschnitt aufweist, und dass der zweite Abschnitt der Gegendichtfläche korrespondierend zum zweiten Abschnitt der Dichtfläche gekrümmt ist. Vorzugsweise ist der zweite Abschnitt der Gegendichtfläche mit einem Radius R6 von < 5 mm, insbesondere < 3 mm, bevorzugt mit einem Radius von 2 mm gekrümmt. Insbesondere entspricht der Radius R6 der Gegendichtfläche dem Radius R2. Insbesondere legt sich im Montagezustand zumindest der zweite Abschnitt der Dichtfläche vollständig an den zweiten Abschnitt der Gegendichtfläche an.

Der erste Abschnitt der Gegendichtfläche ist um einen Winkel β geneigt, so dass der Verbindungsabschnitt der Rohrleitung mit der Dichtfläche zumindest teilweise in den Aufnahmeabschnitt einführbar ist. Vorzugsweise ist der Winkel β größer als der Winkel α ausgebildet. Besonders bevorzugt ist der Winkel β um etwa 1° größer ausgeführt als der Winkel α. Der Winkel β beträgt beispielsweise zwischen 15° und 25°, insbesondere zwischen 18° und 22°, bevorzugt 20°. Dadurch ist gewährleistet, dass zumindest der zweite Abschnitt der Dichtfläche, insbesondere der Glattbereich, im Montagezustand im zweiten Abschnitt der Gegendichtfläche anliegt, wodurch eine vorteilhafte Dichtwirkung erzielt wird. Der Vorteil dieser Ausgestaltung liegt folglich darin, dass im Montagezustand eine vorrangige Verpressung an dem zweiten Abschnitt der Dichtfläche, insbesondere in dem Glattbereich bzw. der ersten Flanke des Dichtvorsprungs erzielt wird.

Eine weitere Ausgestaltung der Rohrverbindung sieht vor, dass der Anschlussstutzen eine Anschlagfläche in Längsrichtung aufweist, und dass der Dichtvorsprung im Montagezustand der Rohrverbindung an der Anschlagfläche anliegt, insbesondere mit seiner Spitze an der Anschlagfläche anliegt. Die Anschlagfläche stellt folglich eine Begrenzung des Eintritts des Verbindungsabschnitts in den Aufnahmeabschnitt des Anschlussstutzens dar. Die Anschlagfläche ist so ausgebildet, dass der Dichtvorsprung im Montagezustand der Rohrverbindung zumindest teilweise an der Anschlagfläche anliegt.

Besonders bevorzugt ist vorgesehen, dass der Dichtvorsprung und/oder die Anschlagfläche bei der Montage plastisch verformt wird bzw. werden. Durch diese plastische Verformung des Dichtvorsprungs und/oder der Anschlagfläche wird nach Erreichen des Montageendpunktes ein weicher Blockanschlag gewährleistet. Dadurch wird sichergestellt, dass bei Übermontage mit zu hohem Drehmoment oder zu hohem Drehwinkel keine plastische Verformung an dem Spannelement oder dem Anschlussstutzen, insbesondere an deren Gewinden, erfolgt. Gleichzeitig ist aber auch gewährleistet, dass ein Nachspannen des Spannelements möglich ist und die Rohrverbindung auf einfache Weise wieder getrennt werden kann.

Eine weitere Ausgestaltung der Rohrverbindung sieht vor, dass der Spitzenpunkt des Dichtvorsprungs einen Durchmesser aufweist, der 88% bis 99% des Außendurchmessers der Rohrleitung entspricht, insbesondere 91% bis 98%. Besonders bevorzugt ist der Durchmesser am Spitzenpunkt des Dichtvorsprungs um 0,5 mm geringer als der Außendurchmesser der Rohrleitung. Durch einen derartige Anordnung des Dichtvorsprungs im Verbindungsabschnitt der Rohrleitung ist ein vorteilhaftes Zusammenwirken des Verbindungsabschnitts und des Aufnahmeabschnitts zur Erreichung einer optimalen Dichtwirkung gewährleistet.

Die eingangs genannte Aufgabe ist ferner gelöst mit einem Stauchwerkzeug zur Herstellung eines Verbindungsabschnitts an einer Rohrleitung, umfassend mindestens eine Matrize und mindestens einen Gegenhalter, wobei die Matrize eine Ausnehmung aufweist, und wobei die Ausnehmung eine geneigte Außenformfläche und eine geneigte Bodenfläche aufweist. Im Randbereich der Bodenfläche ist eine umlaufende Vertiefung ausgebildet. Vorzugsweise treffen sich die Außenformfläche und die Bodenfläche am Tiefpunkt der Vertiefung. Der Tiefpunkt der Vertiefung hat beispielsweise einen Durchmesser, der 88% bis 99% des Außendurchmessers der Rohrleitung entspricht. Vorzugsweise ist der Durchmesser am Tiefpunkt der Vertiefung um 0,5 mm geringer als der Außendurchmesser der verwendeten Rohrleitung.

Diese Vertiefung ist insbesondere dazu vorgesehen, um während des Herstellungsvorgangs eines Verbindungsabschnitts - während des Umformvorgangs - einen Dichtvorsprung an der Rohrleitung auszuformen, indem das Material der Rohrleitung zumindest teilweise in die Vertiefung der Matrize verformt wird.

Durch die Vertiefung im Bereich zwischen der Bodenfläche und der Außenformfläche wird während eines Umformvorgangs eine Krafteinwirkung auf die Stirnfläche der Rohrleitung gewährleistet, durch die das Material der Rohrleitung in Richtung der Dichtfläche, also in Richtung des Außenumfangs der Rohrleitung, gedrängt wird. Dadurch fließt das Material der Rohrleitung teilweise in die Vertiefung und es bildet sich der Dichtvorsprung.

Es hat sich als vorteilhaft herausgestellt, wenn gemäß einer Ausgestaltung vorgesehen ist, dass die Außenformfläche und die Bodenfläche im Bereich der Vertiefung einen Winkel σ von < 120°, bevorzugt < 75°, insbesondere < 50° einschließen. Besonders bevorzugt ist im Tiefpunkt ein Winkel σ im Bereich zwischen 40° und 50°, insbesondere 45°. Sofern die Außenformfläche und/oder die Bodenfläche in diesem Bereich gekrümmt sind bzw. bogenförmig verlaufen, ist insbesondere vorgesehen, dass der Winkel σ zwischen den Tangenten an die Außenformfläche und die Bodenfläche bestimmt werden. Bevorzugt ist vorgesehen, dass sämtliche Tangenten an die Außenformfläche und die Bodenfläche zwischen 1/3 der Tiefe und 2/3 der Tiefe der Vertiefung in einem Bereich zwischen 46° und 79°, insbesondere zwischen 56° und 69° liegen. Insbesondere schließen die Tangenten an die Außenformfläche und an die Bodenfläche im Tiefpunkt einen Winkel σ zwischen 40° und 50°, insbesondere von 45°, ein.

Vorzugsweise wird die Tiefe der Vertiefung ausgehend von einer Ebene bestimmt, deren Normale im Querschnitt parallel zum ersten Abschnitt der Außenformfläche verläuft und in der im Querschnitt der erste Abschnitt der Bodenfläche verläuft. Die Normale zur Ebene, entlang der die Tiefe der Vertiefung bestimmt wird, schneidet den Tiefpunkt der Vertiefung.

Es ist des Weiteren vorgesehen, dass die geneigte Außenformfläche zunächst einen ersten Abschnitt aufweist, der kegelstumpfförmig um einen Winkel γ zur Achse M der Matrize geneigt ist. Der Winkel γ beträgt beispielsweise zwischen 15° und 25°, insbesondere zwischen 18° und 22°, bevorzugt 19°. Die Achse M der Matrize fällt üblicherweise mit der Längsachse A der Rohrleitung zusammen. An den ersten Abschnitt der Außenformfläche schließt sich zumindest ein zweiter, gekrümmter Abschnitt an, der vorzugsweise mit einem Radius R4 gekrümmt ist. Der Radius R4 ist insbesondere identisch mit dem Radius R2 bzw. dem Radius R1.

Durch den gekrümmten bzw. bogenförmigen zweiten Abschnitt der Außenformfläche wird während der Umformung der Rohrleitung der zweite Abschnitt der Dichtfläche der Rohrleitung sowie die erste Flanke des Dichtvorsprungs geformt. Ferner ist vorgesehen, dass sich die Bodenfläche ausgehend von einem um einen Winkel δ zur Achse M der Matrize kegelförmig geneigten ersten Abschnitt zu einem - im Randbereich angeordneten - zweiten Abschnitt der Bodenfläche erstreckt. Der zweite Abschnitt ist zumindest um einen Radius R5 gekrümmt und erstreckt sich bis zu dem Kontaktbereich mit der Außenformfläche am Tiefpunkt der Vertiefung. Der Radius R5 ist vorzugsweise < 1,8 mm, insbesondere < 1,2 mm, insbesondere beträgt der Radius R5 0,6 mm. Vorzugsweise wird die Vertiefung im Randbereich der Bodenfläche einerseits durch den gewölbten zweiten Abschnitt der Bodenfläche sowie durch den gewölbten zweiten Abschnitt der Außenformfläche gebildet, so dass beide Flanken der Vertiefung gewölbt sind.

Dadurch, dass sich in der Bodenfläche, ausgehend von dem gebogenen zweiten Abschnitt der kegelförmig geneigte erste Abschnitt anschließt, entsteht in der Bodenfläche ein umlaufender Formkragen zumindest mit dem Radius R5, der während der Umformung der Rohrleitung insbesondere auf die Stirnfläche der Rohrleitung einwirkt und dadurch die zweite Flanke des Dichtvorsprungs bzw. den auch an der ersten Flanke angeordneten Glattbereich formt. Deshalb entspricht der Radius R5 bevorzugt dem Radius R3. Eine derartige Matrize hat ferner den Vorteil, dass sie bei gleichem Außendurchmesser der Rohrleitung für beliebige Rohrwandstärken geeignet ist, um einen Dichtvorsprung an der Rohrleitung auszubilden.

Zur Herstellung und Wartung des Stauchwerkzeugs hat es sich ferner als vorteilhaft herausgestellt, wenn vorgesehen ist, dass die Matrize zumindest im Kontaktbereich zwischen Außenformfläche und Bodenfläche, also am Tiefpunkt der Vertiefung, teilbar ist. Dadurch wird einerseits die Herstellbarkeit der Matrize vereinfacht, andererseits aber auch gleichzeitig das Ergebnis der Umformung, nämlich die Qualität der Konturen des Verbindungsabschnitts, insbesondere des Dichtvorsprungs, verbessert.

Die einleitend genannte Aufgabe ist ferner gelöst durch ein Verfahren zur Herstellung eines Verbindungsabschnitts an einer Rohrleitung, wobei die Rohrleitung von einem Gegenhalter gehalten wird, indem der Gegenhalter die Rohrleitung umfassend einspannt. Durch eine axiale Relativbewegung wird die Rohrleitung in eine Matrize gepresst, wobei durch Krafteinwirkung der Matrize auf die Stirnfläche der Rohrleitung und eine Außenumfangsfläche, nämlich die spätere Dichtfläche, der Rohrleitung ein Verbindungsabschnitt mit einem Dichtvorsprung ausgebildet wird.

Dadurch, dass die Matrize eine Kraft auf die Stirnfläche der Rohrleitung bewirkt, wird das Material in Richtung der Außenumfangsfläche - der Dichtfläche - der Rohrleitung gepresst, wodurch das Material zu fließen beginnt und der Dichtvorsprung ausgebildet wird. Vorteilhaft wird zudem gleichzeitig der Glattbereich ausgebildet.

Die Wirkrichtung der Kraft auf die Stirnfläche der Rohrleitung lässt sich zudem genauer ausrichten, wenn vorgesehen ist, dass die Matrize eine geneigte Bodenfläche aufweist, und dass von der geneigten Bodenfläche, insbesondere von einem gekrümmten zweiten Abschnitt der Bodenfläche, eine Kraft auf die Stirnseite der Matrize in Richtung der Außenumfangsfläche der Rohrleitung bewirkt wird. Die Bodenfläche der Matrize bewirkt folglich nicht lediglich eine Kraft parallel zur neutralen Faser der Rohrleitung, sondern eine Kraft die schräg dazu verläuft, nämlich die schräg auf die Stirnfläche gerichtet ist. Dadurch wird die Stirnfläche gekrümmt und der Dichtvorsprung bildet sich nach außen aus.

Im Einzelnen gibt es nun eine Vielzahl an Möglichkeiten, die erfindungsgemäße Rohrverbindung, das Stauchwerkzeug und das Verfahren auszugestalten und weiterzubilden. Dazu wird verwiesen auf die den Patentansprüchen 1, 14 und 18 nachgeordneten Patentansprüche sowie auf die nachfolgende Beschreibung von bevorzugten Ausführungsbeispielen in Verbindung mit der Zeichnung. In der Zeichnung zeigen:
- Fig. 1: ein Ausführungsbeispiel einer Rohrverbindung in geschnittener Seitenansicht,
- Fig. 2: einen vergrößerten Ausschnitt des Ausführungsbeispiels gemäß Fig. 1,
- Fig. 3: ein Ausführungsbeispiel einer Rohrleitung für eine Rohrverbindung,
- Fig. 3a: einen vergrößerten Ausschnitt des Ausführungsbeispiels gemäß Fig. 3,
- Fig. 4: ein Ausführungsbeispiel eines Anschlussstutzens für eine Rohrverbindung,
- Fig. 5: ein Ausführungsbeispiel eines Stauchwerkzeugs in einem ersten Zustand,
- Fig. 5a: ein Ausführungsbeispiel einer Matrize für ein Stauchwerkzeug,
- Fig. 5b: eine teilweise vergrößerte Ansicht der Matrize gemäß Fig. 5a,
- Fig. 6: das Stauchwerkzeug gemäß Fig. 5 in einem zweiten Zustand,
- Fig. 7: das Stauchwerkzeug gemäß Fig. 5 in einem dritten Zustand, und
- Fig. 8: einen schematischen Ablauf eines Ausführungsbeispiels eines Verfahrens.

In den verschiedenen Figuren der Zeichnung sind gleiche Teile stets mit denselben Bezugszeichen versehen.

In der anschließenden Beschreibung gilt als erfindungswesentlich offenbart, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst im Zusammenhang damit beschriebenen Teilmerkmalen für sich und auch in Kombination mit beliebigen Merkmalen eines anderen Ausführungsmerkmalbeispiels sowie auch unabhängig von den Merkmalskombinationen und Rückbeziehungen der Ansprüche eine erfinderische Bedeutung haben, und zwar in Kombination mit den Merkmalen der Ansprüche 1, 14 und 18.

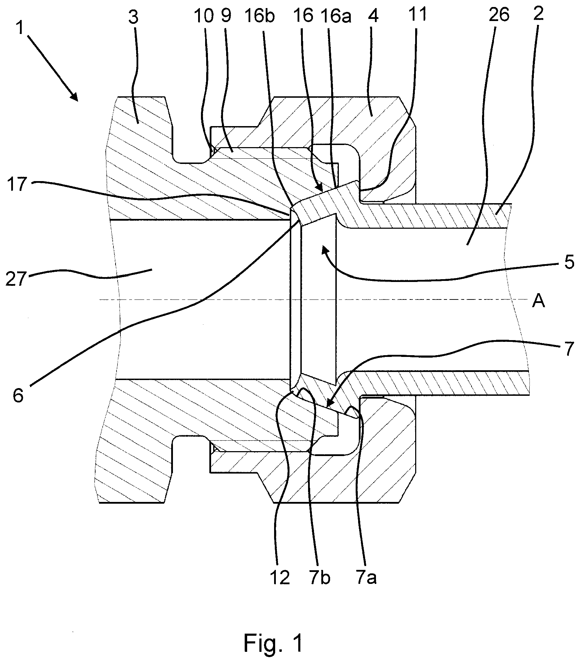

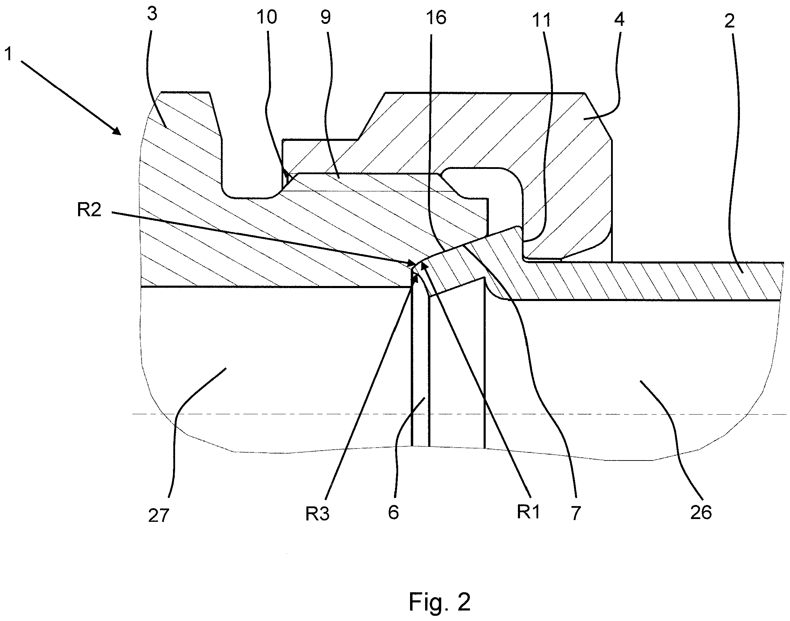

Fig. 1 zeigt ein Ausführungsbeispiel einer Rohrverbindung 1 zum Anschluss einer Rohrleitung 2 in geschnittener Seitenansicht im Montagezustand. Fig. 2 zeigt einen vergrößerten Ausschnitt dieses Ausführungsbeispiels. Die Rohrverbindung 1 umfasst eine Rohrleitung 2, einen Anschlussstutzen 3 und ein Spannelement 4. Die Rohrleitung 2 weist einen Verbindungsabschnitt 5 sowie eine endseitige Stirnfläche 6 auf. Der Verbindungsabschnitt 5 ist in einem Endbereich der Rohrleitung 2 ausgebildet und weist eine in Richtung des Endbereichs geneigte Dichtfläche 7 auf.

Um eine dichtende Verbindung zwischen der Rohrleitung 2 und dem Anschlussstutzen 3 herzustellen, weist der Anschlussstutzen 3 einen Aufnahmeabschnitt 8 auf, der im dargestellten Montagezustand zumindest einen Teil des Verbindungsabschnitts 5 aufnimmt. Der freie Strömungsquerschnitt 26 der Rohrleitung 2 ist strömungstechnisch mit dem freien Strömungsquerschnitt 27 des Anschlussstutzens 3 verbunden. Der Anschlussstutzen 3 verfügt über ein Anschlussgewinde 9, auf das das Spannelement 4 mit einem korrespondierenden Spanngewinde 10 aufgeschraubt ist, so dass das Spannelement 4 eine Kraft im Wesentlichen parallel zur Längsachse A der Rohrleitung 2 über eine Spannschulter 11 auf die Rohrleitung 2 bewirkt. Dadurch wird die Rohrleitung 2 zwischen dem Anschlussstutzen 3 und dem Spannelement 4 eingeklemmt, insbesondere der Verbindungsabschnitt 5 gegen den Aufnahmeabschnitt 8 des Anschlussstutzens 3 gepresst. Die Stirnfläche 6 weist einen Dichtvorsprung 12 auf, der als lokale Erhebung in der Stirnfläche 6 ausgebildet ist.

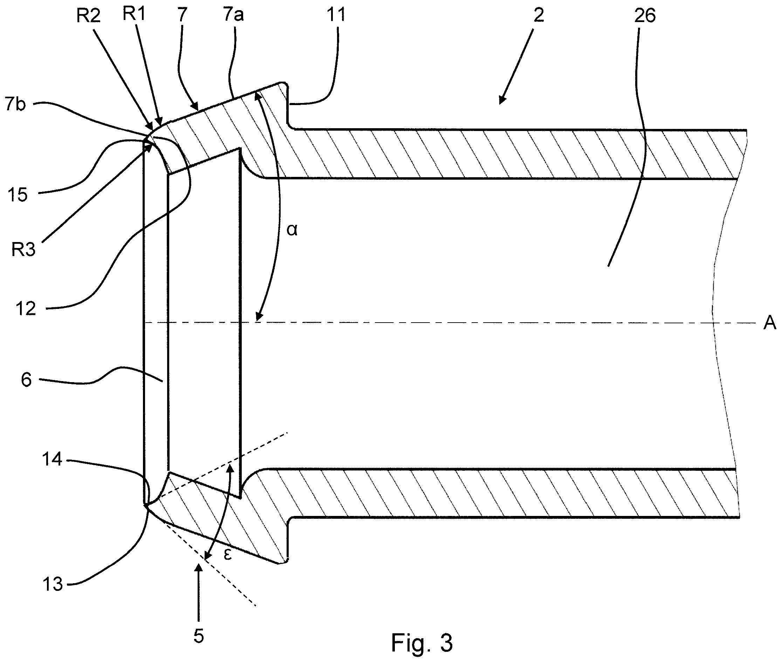

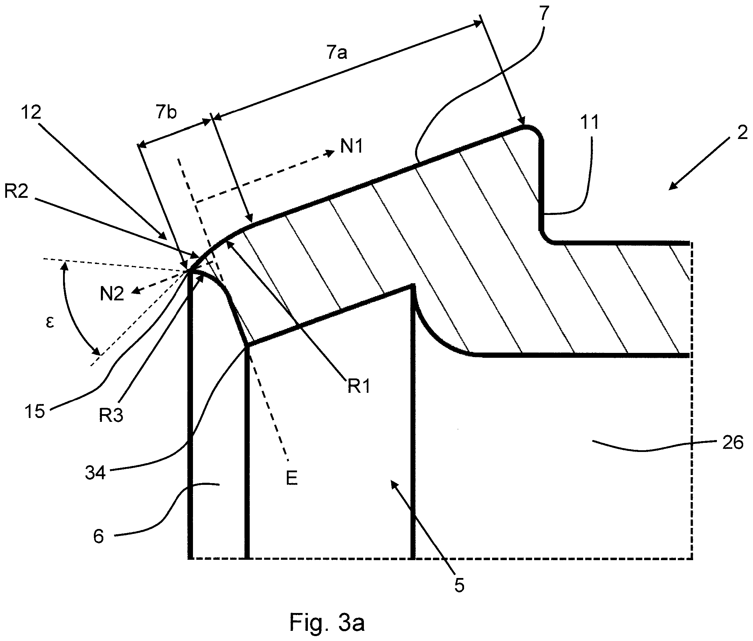

Fig. 3 zeigt ein Ausführungsbeispiel einer Rohrleitung 2 für eine Rohrverbindung 1, beispielsweise gemäß Fig. 1 und Fig. 2, in geschnittener Seitenansicht. Die Dichtfläche 7 umfasst, insbesondere gemäß Fig. 2, Fig. 3 und Fig. 3a, einen ersten Abschnitt 7a, der kegelstumpfförmig mit einem Winkel α zur Längsachse A der Rohrleitung geneigt ist. In Richtung des Endbereichs der Rohrleitung 2 schließt sich an den ersten Abschnitt 7a ein zweiter Abschnitt 7b an, der mit einem Radius R1 von 2 mm gekrümmt ist. Eine erste Flanke 13 des Dichtvorsprungs 12 ist Teil des zweiten Abschnitts 7b der Dichtfläche 7. Die erste Flanke 13 des Dichtvorsprungs 12 und eine zweite Flanke 14 des Dichtvorsprungs 12 nähern sich in Richtung eines Spitzenpunkts 15 des Dichtvorsprungs 12 einander an. Die Krümmung der zweiten Flanke 14 ist konkav, während die Krümmung der ersten Flanke 13 konvex ist. Der Dichtvorsprung 12 geht über die zweite Flanke 14 stetig in den verbleibenden Teil der Stirnfläche 6 über.

Die erste Flanke 13 ist mit einem Radius R2 von 2 mm gekrümmt, der bei diesem Ausführungsbeispiel mit dem Radius R1 übereinstimmt, so dass der zweite Abschnitt 7b eine einheitliche Krümmung aufweist. Ferner ist die zweite Flanke 14 mit einem Radius R3 von 0,6 mm gekrümmt. Die Tangente an die erste Flanke 13 und die Tangente an die zweite Flanke 14 schließen am Spitzenpunkt 15 einen Winkel ε ein, der bei diesem Ausführungsbeispiel etwa 45° beträgt.

Der Verbindungsabschnitt 5 umfasst eine Spannschulter 11, an der im Montagezustand das Spannelement 4 anliegt. Die Spannschulter 11 ist bei dem Ausführungsbeispiel gemäß Fig. 3 orthogonal zur Längsachse A der Rohrleitung 2 ausgebildet. Der Spitzenpunkt 15 des Dichtvorsprungs 12 bildet den Übergang von der ersten Flanke 13 auf die zweite Flanke 14. Der Dichtvorsprung 12 ist an der Rohrleitung 2 umlaufend ausgebildet. Bei diesem Ausführungsbeispiel ist im zweiten Abschnitt 7b ein Glattbereich ausgebildet, in dem der arithmetische Mittenrauwert Ra geringer ist als der arithmetische Mittenrauwert Ra im ersten Abschnitt 7a. Der arithmetische Mittenrauwert Ra ist im zweiten Abschnitt 7b deshalb geringer, weil der Glattbereich durch die bei der plastischen Umformung wirkenden Druckkräfte geglättet worden ist.

Fig. 3a zeigt einen vergrößerten Ausschnitt des Ausführungsbeispiels gemäß Fig. 3. Die Höhe des Dichtvorsprungs 12 lässt sich im Querschnitt als Länge der Erstreckung entlang der Normalen N2 zur Ebene E und dem Spitzenpunkt 15 des Dichtvorsprungs 12 bestimmen. Die Normale N2 schneidet den Spitzenpunkt 15 des Dichtvorsprungs 12. Im Querschnitt ist die Ebene E derart orientiert, dass die Normale N1 der Ebene E parallel zur Dichtfläche 7, insbesondere dem ersten Abschnitt 7a der Dichtfläche 7, verläuft. Ferner liegt die Kante 34 zwischen Stirnfläche 6 und Innenumfang der Rohrleitung 2 in der Ebene. Die Breite des Dichtvorsprungs 12 lässt sich als Länge der Erstreckung des Dichtvorsprungs 12 in der Ebene E bestimmen. Die Ebene E ist für jeden Schnitt der Rohrleitung 2 neu orientiert.

Der erste Abschnitt 7a erstreckt sich von der Spannschulter 11 bis zu der Stelle, an der eine Krümmung der Dichtfläche 7 und damit der zweite Abschnitt 7b der Dichtfläche 7 beginnt. Die Ebene E markiert den Beginn der ersten Flanke 13 im zweiten Abschnitt 7b der Dichtfläche 7. Die Radien R1 und R2 stimmen bei diesem Ausführungsbeispiel überein. Die Tangente an die erste Flanke 13 und die Tangente an die zweite Flanke 14 schließen im Spitzenpunkt 15 einen Winkel ε von etwa 45° ein. Die zweite Flanke 14 des Dichtvorsprungs 12 geht mit dem Radius R3 in den verbleibenden Teil der Stirnfläche 6 über, der bei diesem Ausführungsbeispiel vollständig in der Ebene E liegt.

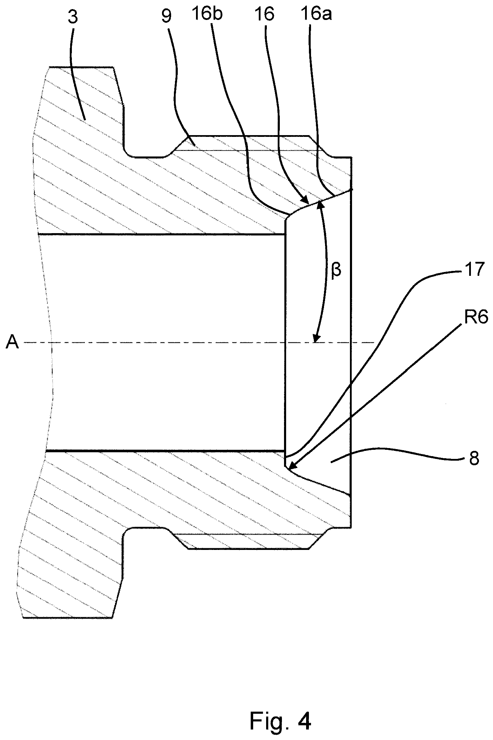

Fig. 4 zeigt ein Ausführungsbeispiel eines Anschlussstutzens 3 für eine Rohrverbindung 1 gemäß Fig. 1 und Fig. 2 in geschnittener Seitenansicht. Insbesondere gemäß Fig. 2 und Fig. 4 weist der Anschlussstutzen 3 eine Gegendichtfläche 16 auf, die einen ersten Abschnitt 16a umfasst, der um einen Winkel β geneigt ist. Bei dem Ausführungsbeispiel gemäß Fig. 1 und Fig. 2 sind der Winkel α und der Winkel β identisch.

An den ersten Abschnitt 16a der Gegendichtfläche schließt sich, insbesondere gemäß Fig. 2 und Fig. 4, ein zweiter Abschnitt 16b der Gegendichtfläche 16 an, der korrespondierend zum zweiten Abschnitt 7b der Dichtfläche 7 geformt ist, nämlich mit einem Radius R6 gekrümmt ist, der bei diesem Ausführungsbeispiel dem Radius R2 der Rohrleitung gemäß Fig. 2 entspricht. Der Anschlussstutzten 3 weist eine Anschlagfläche 17 auf, die als Anschlag in Längsrichtung der Längsachse A der Rohrleitung 2 dient, wobei in dem in Fig. 1 und Fig. 2 dargestellten Montagezustand der Rohrverbindung 1 der Dichtvorsprung 12 an der Anschlagfläche 17 anliegt. Bei diesem Ausführungsbeispiel ist zudem der gesamte zweite Abschnitt 7b der Dichtfläche 7 als Glattbereich ausgebildet, wobei die Dichtwirkung überwiegend durch die Anlage des zweiten Abschnitts 7b der Dichtfläche 7 am zweiten Abschnitt 16b der Gegendichtfläche 16 erzielt wird.

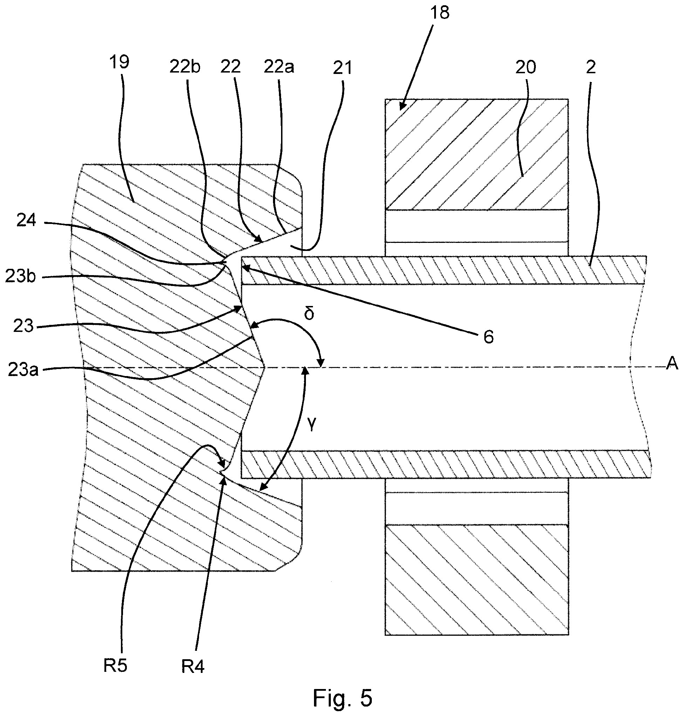

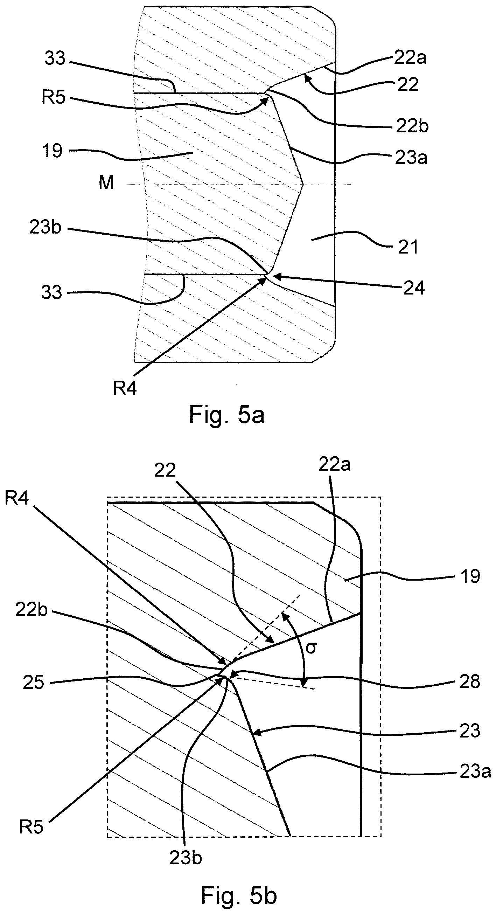

Fig. 5 zeigt ein Ausführungsbeispiel eines Stauchwerkzeugs 18 zur Herstellung eines Verbindungsabschnitts 5 an einer Rohrleitung 2 in geschnittener Seitenansicht und in einem ersten Zustand. Fig. 5 zeigt insbesondere eine noch nicht umgeformte Rohrleitung 2. Fig. 5a zeigt ein Ausführungsbeispiel einer Matrize 19 für ein Stauchwerkzeug 18 und Fig. 5b zeigt einen vergrößerten Ausschnitt der Matrize 19 gemäß Fig. 5a jeweils in geschnittener Seitenansicht. Das Stauchwerkzeug 18 umfasst gemäß Fig. 5 eine Matrize 19 sowie einen mehrteiligen Gegenhalter 20. Die Matrize 19 weist gemäß den Fig. 5, 5a und 5b eine Ausnehmung 21 auf, wobei die Ausnehmung 21 eine geneigte Außenformfläche 22 aufweist. Zudem weist die Ausnehmung 21 eine geneigte Bodenfläche 23 auf. Im Randbereich der Bodenfläche 23 ist eine Vertiefung 24 ausgebildet, die zur Formung des Dichtvorsprungs 12 an der Rohrleitung 2 dient (siehe beispielsweise Fig. 3 und Fig. 3a).

Die Außenformfläche 22 weist einen ersten Abschnitt 22a auf, der um den Winkel γ geneigt ist und gemäß der Umfangsfläche eines Kegelstumpfes ausgebildet ist. An den ersten Abschnitt 22a schließt sich ein zweiter Abschnitt 22b an, der mit einem Radius R4 gekrümmt ist. Im vorliegenden Fall beträgt der Radius R4 2 mm und stimmt mit dem Radius R2 der ersten Flanke 13 des Dichtvorsprungs 12 bzw. dem Radius R1 des zweiten Abschnitts 7b der Dichtfläche 7 an der Rohrleitung 2 überein (siehe Fig. 2, Fig. 3 und Fig. 3a).

Ferner weist die Bodenfläche 23, insbesondere gemäß Fig. 5a und Fig. 5b, einen ersten Abschnitt 23a auf, der um einen Winkel δ geneigt ist. Der erste Abschnitt 23a ist kegelförmig ausgebildet. Der Winkel δ beträgt bei diesem Ausführungsbeispiel etwa 110 °. Der erste Abschnitt formt die Stirnfläche 6 am Verbindungsabschnitt 5 einer Rohrleitung, so dass sich der Winkel δ entsprechend mit dem Neigungswinkel der Stirnfläche ergänzt. Ferner weist die Bodenfläche 23 einen zweiten Abschnitt 23b auf, der mit einem Radius R5 gekrümmt ist, wobei der Radius R5 bei diesem Ausführungsbeispiel etwa 0,6 mm beträgt und dem Radius R3 entspricht. Der zweite Abschnitt 23b formt die zweite Flanke 14 des Dichtvorsprungs 12 an einer Rohrleitung 2.

In Fig. 5a sind die Teilflächen 33 eingezeichnet, an denen die Matrize 19 geteilt werden kann, nämlich im Bereich des Tiefpunkts 25 der Vertiefung 24. Die Teilflächen 33 sind aus Gründen der Übersicht in Fig. 5b nicht eingezeichnet.

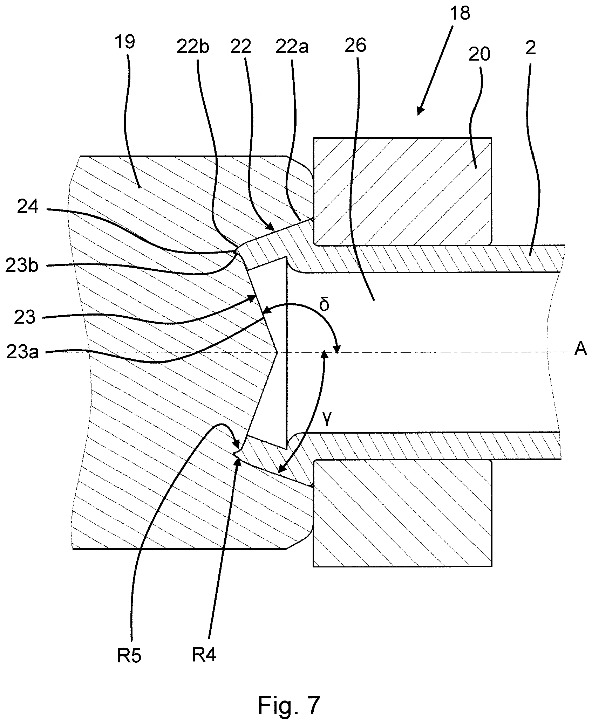

Fig. 5b ist insbesondere zu entnehmen, dass die Außenformfläche 22 in einem ersten Abschnitt 22a kegelstumpfförmig ausgebildet ist und in Richtung der Bodenfläche 23 zusammenläuft. In einem zweiten Bereich 22b weist die Außenformfläche 22 den Radius R4 auf, der bei diesem Ausführungsbeispiel 2 mm beträgt. Die Außenformfläche 22 und die Bodenfläche 23 laufen in der Vertiefung 24 zusammen, insbesondere nämlich mit dem gekrümmten zweiten Abschnitt 22b der Außenformfläche 22 und dem zweiten Abschnitt 23b der Bodenfläche 23. Die Tangente an die Außenformfläche 22 und die Tangente an die Bodenfläche 23 schließen im Tiefpunkt 25 der Vertiefung 24 einen Winkel σ ein, der bei diesem Ausführungsbeispiel etwa 45° beträgt. Die Bodenfläche 23 weist den ersten Abschnitt 23a auf, der um einen Winkel δ zur Achse M der Matrize geneigt ist. In einem zweiten Bereich 23b weist die Bodenfläche den Radius R5 auf, der bei diesem Ausführungsbeispiel 0,6 mm beträgt. Im zweiten Abschnitt 23b der Bodenfläche 23 wird ein Formkragen 28 gebildet, der bei der Umformung insbesondere auf die Stirnfläche 6 der Rohrleitung 2 wirkt und das Material der Rohrleitung 2 in Richtung der Dichtfläche 7 presst (siehe auch Fig. 7).

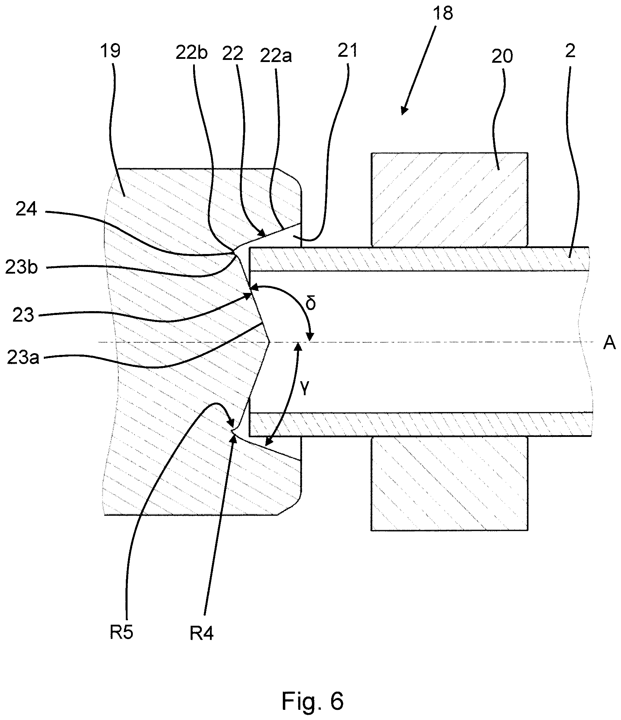

Fig. 6 zeigt das Stauchwerkzeug 18 in einem zweiten Zustand, nämlich mit geschlossenem Gegenhalter 20, so dass nun eine Relativbewegung zwischen dem Gegenhalter 20 und der Matrize 19 zur Umformung der Rohrleitung 2 erfolgen kann, bei der die Rohrleitung 2 mit ihrem Endbereich in die Matrize 19 gepresst wird.

Fig. 7 zeigt das Ausführungsbeispiel des Stauchwerkzeugs 18 in einem dritten Zustand, nämlich im vollständig geschlossenen Zustand. In diesem Zustand ist bereits der Verbindungsabschnitt 5 an der Rohrleitung 2 durch Krafteinwirkung ausgebildet. Deutlich zu erkennen ist, wie der Verbindungsabschnitt 5, insbesondere der Dichtvorsprung 12, durch die Matrize 19, insbesondere die Vertiefung 24 im Randbereich der Bodenfläche 23 der Ausnehmung 21 geformt wird.

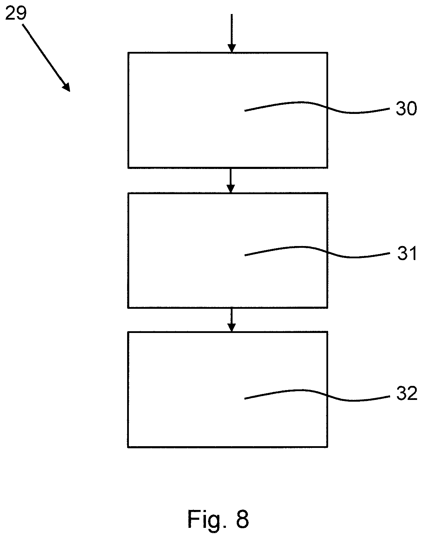

Fig. 8 zeigt beispielhaft einen schematischen Ablauf des Verfahrens 29, bei dem zunächst ein Halten 30 der Rohrleitung 2 in einem Gegenhalter 20 erfolgt. Anschließend erfolgt eine Relativbewegung 31 zwischen dem Gegenhalter 20 und der Matrize 19, wodurch die Rohrleitung 2 mit einem Endbereich in die Matrize 10 gepresst wird. Durch die Krafteinwirkung der Matrize 19 auf die Stirnfläche 6 der Rohrleitung 2 erfolgt ein Ausbilden 32 des Verbindungsabschnitts 5 mit dem Dichtvorsprung 12.

Die Erfindung ist nicht auf die dargestellten und beschriebenen Ausführungsbeispiele beschränkt, sondern umfasst auch alle im Sinne der Erfindung gleichwirkenden Ausführungen.

## Patentansprüche

1. Rohrleitung (2), umfassend mindestens einen Verbindungsabschnitt (5) und eine endseitige Stirnfläche (6), wobei der Verbindungsabschnitt (5) in einem Endbereich der Rohrleitung (2) ausgebildet ist, wobei die Stirnfläche (6) einen Dichtvorsprung (12) aufweist, und wobei der Dichtvorsprung (12) als Erhebung mit einer ersten und zweiten Flanke (13, 14) in der Stirnfläche (6) ausgebildet ist, wobei der Verbindungsabschnitt (5) mindestens eine in Richtung des Endbereichs geneigte Dichtfläche (7) aufweist,
**dadurch gekennzeichnet, dass**
der Dichtvorsprung (12) in einem Randbereich der Stirnfläche (6) ausgebildet ist, so dass mindestens eine seiner Flanken (13,14) unmittelbar in die geneigte Dichtfläche (7) des Verbindungsabschnitts (5) übergeht.

2. Rohrleitung (2) nach Anspruch 1,
**dadurch gekennzeichnet, dass**
die Dichtfläche (7) mindestens einen ersten Abschnitt (7a) umfasst, der kegelstumpfförmig um einen Winkel (α) geneigt ist, dass die Dichtfläche (7) mindestens einen sich in Richtung des Endbereichs an den ersten Abschnitt (7a) anschließenden zweiten Abschnitt (7b) aufweist, und dass der zweite Abschnitt (7b) zumindest einen Radius (R1) aufweist.

3. Rohrleitung (2) nach Anspruch 1 oder 2,
**dadurch gekennzeichnet, dass**
sich die erste Flanke (13) und die zweite Flanke (14) in Richtung eines Spitzenpunkts (15) des Dichtvorsprungs (12) einander annähern, vorzugsweise dass die erste Flanke (13) und die zweite Flanke (14) über die gesamte Höhe des Dichtvorsprungs (12) einen Winkel (ε) kleiner 120° einschließen, insbesondere kleiner 75°, bevorzugt kleiner 50°.

4. Rohrleitung (2) nach Anspruch 3,
**dadurch gekennzeichnet, dass**
die erste Flanke (13) und die zweite Flanke (14) im Spitzenpunkt (15) des Dichtvorsprungs (12) einen Winkel (ε) zwischen 40° und 50°, insbesondere 45°, einschließen und/oder dass die erste Flanke (13) zumindest einen Radius (R2) aufweist, und dass die zweite Flanke (14) zumindest einen Radius (R3) aufweist.

5. Rohrleitung (2) nach Anspruch 3 oder 4,
**dadurch gekennzeichnet, dass**
die erste Flanke (13) konvex und/oder die zweite Flanke (14) konkav gekrümmt ist.

6. Rohrleitung (2) nach einem der Ansprüche 1 bis 5,
**dadurch gekennzeichnet, dass**
der Dichtvorsprung (12) eine Höhe zwischen 0,3 mm und 0,5 mm und/oder eine Breite an seiner Basis zwischen 0,5 mm und 0,9 mm aufweist.

7. Rohrleitung (2) nach einem der Ansprüche 3 bis 6,
**dadurch gekennzeichnet, dass**
die erste Flanke (13) stetig in die Dichtfläche (7) übergeht.

8. Rohrleitung (2) nach einem der Ansprüche 1 bis 7,
**dadurch gekennzeichnet, dass**
die Stirnfläche (6) um einen Winkel zwischen 50° und 90° zur Längsachse A der Rohrleitung (2) geneigt ist, insbesondere um einen Winkel zwischen 65° und 75°, besonders bevorzugt von etwa 70°, und/oder dass der Dichtvorsprung (12) durch plastische Umformung der Rohrleitung (2) hergestellt ist, insbesondere durch plastische Umformung durch Krafteinwirkung auf die Stirnfläche (6) und die Dichtfläche (7) der Rohrleitung (2).

9. Rohrleitung (2) nach einem der Ansprüche 1 bis 8,
**dadurch gekennzeichnet, dass**
die Dichtfläche (7) mindestens einen Glattbereich aufweist, dessen Oberflächenrauheit geringer ist als die Oberflächenrauheit in mindestens einem an den Glattbereich angrenzenden Bereich der Dichtfläche (7).

10. Rohrleitung (2) nach Anspruch 9,
**dadurch gekennzeichnet, dass**
die Oberflächenrauheit anhand eines arithmetischen Mittenrauwert (Ra) und einer Profiltiefe (Pt) bestimmt wird, und dass durch die Umformung eine derartige Krafteinwirkung im Glattbereich erfolgt, dass der arithmetische Mittenrauwert (Ra) und die Profiltiefe (Pt) in Bezug auf die Ausgangswerte im Glattbereich um mindestens 50% reduziert werden, insbesondere um mindestens 75% reduziert werden.

11. Rohrleitung (2) nach einem der Ansprüche 3 bis 10,
**dadurch gekennzeichnet, dass**
der Spitzenpunkt (15) des Dichtvorsprungs (12) einen Durchmesser aufweist, der 88% bis 99% des Außendurchmessers der Rohrleitung entspricht, insbesondere 91% bis 98%.

12. Rohrverbindung (1) zum Anschluss einer Rohrleitung (2), umfassend eine Rohrleitung (2) nach einem der Ansprüche 1 bis 11, einen Anschlussstutzen (3) und ein Spannelement (4), wobei der Anschlussstutzen (3) einen Aufnahmeabschnitt (8) zur Aufnahme zumindest eines Teils des Verbindungsabschnitts (5) aufweist,
**dadurch gekennzeichnet, dass**
eine dichtende Verbindung zwischen der Rohrleitung (2) und dem Anschlussstutzen (3) herstellbar ist, indem der Verbindungsabschnitt (5) zwischen dem Anschlussstutzen (3) und dem Spannelement (4) eingespannt wird.

13. Rohrverbindung (1) nach Anspruch 12,
**dadurch gekennzeichnet, dass**
der Anschlussstutzen (3) im Aufnahmeabschnitt (8) eine Gegendichtfläche (16) aufweist, dass die Gegendichtfläche (16) mindestens einen kegelstumpfförmig um einen Winkel (β) geneigten ersten Abschnitt (16a) aufweist, dass die Gegendichtfläche (16) mindestens einen zweiten Abschnitt (16b) aufweist, und dass der zweite Abschnitt (16b) der Gegendichtfläche (16) korrespondierend zum zweiten Abschnitt (7b) der Dichtfläche (7) geformt ist, und/oder dass der Anschlussstutzen (3) eine Anschlagfläche (17) in Längsrichtung aufweist, und dass der Dichtvorsprung (12) im Montagezustand der Rohrverbindung (1) an der Anschlagfläche (17) anliegt.

14. Stauchwerkzeug (18) zur Herstellung eines Verbindungsabschnitts (5) an einer Rohrleitung (2) nach einem der Ansprüche 1 bis 11, umfassend mindestens eine Matrize (19) und mindestens einen Gegenhalter (20), wobei die Matrize (19) eine Ausnehmung (21) aufweist, und wobei die Ausnehmung (21) eine geneigte Außenformfläche (22) und eine geneigte Bodenfläche (23) aufweist,
**dadurch gekennzeichnet, dass**
im Randbereich der Bodenfläche (23) eine Vertiefung (24) ausgebildet ist, um während des Herstellungsvorgangs eines Verbindungsabschnitts (5) einen Dichtvorsprung (12) an der Rohrleitung (2) auszuformen, indem das Material der Rohrleitung (2) zumindest teilweise in die Vertiefung (24) der Matrize (19) verformt wird.

15. Stauchwerkzeug (18) nach Anspruch 14,
**dadurch gekennzeichnet, dass**
die Außenformfläche (22) und die Bodenfläche (23) im Bereich der Vertiefung (24) einen Winkel (σ) von kleiner 120 ° einschließen, insbesondere kleiner 75°, vorzugsweise kleiner 50°.

16. Stauchwerkzeug (18) nach Anspruch 14 oder 15,
**dadurch gekennzeichnet, dass**
die Außenformfläche (22) mindestens einen ersten Abschnitt (22a) aufweist, dass der erste Abschnitt (22a) um einen Winkel (γ) geneigt ist, dass die Außenformfläche (22) mindestens einen zweiten Abschnitt (22b) aufweist, dass der zweite Abschnitt (22b) zumindest einen Radius (R4) aufweist und/oder dass die Bodenfläche (23) einen ersten Abschnitt (23a) aufweist, dass der erste Abschnitt (23a) um einen Winkel (δ) geneigt ist, dass die Bodenfläche (23) einen zweiten Abschnitt (23b) aufweist, und dass der zweite Abschnitt (23b) zumindest einen Radius (R5) aufweist.

17. Stauchwerkzeug (18) nach einem der Ansprüche 14 bis 16,
**dadurch gekennzeichnet, dass**
die Matrize (19) zumindest im Tiefpunkt (25) der Vertiefung (24) zwischen Außenformfläche (22) und Bodenfläche (23) teilbar ist.

18. Verfahren (29) zur Herstellung eines Verbindungabschnitts (5) an einer Rohrleitung (2), wobei die Rohrleitung (2) von einem Gegenhalter (20) gehalten (30) wird, wobei die Rohrleitung (2) durch eine axiale Relativbewegung (31) zwischen Gegenhalter (20) und Matrize (19) mit einem Endbereich in die Matrize (19) gepresst wird,
**dadurch gekennzeichnet, dass**
durch Krafteinwirkung der Matrize (19) auf die Stirnfläche (6) der Rohrleitung (2) und eine Außenumfangsfläche der Rohrleitung (2) ein Verbindungsabschnitt (5) mit einem Dichtvorsprung (12) mit den Merkmalen eines Dichtvorsprungs (12) gemäß mindestens einem Anspruch der Ansprüche 1 bis 11 ausgebildet wird.

19. Verfahren (29) nach Anspruch 18,
**dadurch gekennzeichnet, dass**
die Matrize (19) eine geneigte Bodenfläche (23) aufweist, und dass durch die axiale Relativbewegung von der Bodenfläche (23) eine Kraft auf die Stirnseite (6) in Richtung der Außenumfangsfläche der Rohrleitung (2) bewirkt wird.

## Claims

1. Pipe (2), comprising at least one connecting section (5) and a terminal abutting face (6), wherein the connecting section (5) being formed in an end zone of the pipe (2), the abutting face (6) having a sealing protrusion (12), and the sealing protrusion (12) being formed as an elevation with a first and second flank (13, 14) in the abutting face (6), wherein the connecting section (5) having at least one sealing surface (7) which is inclined in the direction of the end zone,
**characterized in that**
the sealing protrusion (12) is formed in an edge region of the abutting face (6) so that at least one of its flanks (13, 14) merges directly into the inclined sealing surface (7) of the connecting section (5).

2. Pipe (2) according to claim 1,
**characterized in that**
the sealing surface (7) comprises at least a first section (7a) which is inclined frustoconically by an angle (α), **in that** the sealing surface (7) has at least a second section (7b) adjoining the first section (7a) in the direction of the end zone, and **in that** the second section (7b) has at least a radius (R1).

3. Pipe (2) according to claim 1 or 2,
**characterized in that**
the first flank (13) and the second flank (14) approach each other in the direction of a peak (15) of the sealing protrusion (12), preferably that the first flank (13) and the second flank (14) enclose an angle (ε) smaller than 120° over the entire height of the sealing protrusion (12), in particular smaller than 75°, preferably smaller than 50°.

4. Pipe (2) according to claim 3,
**characterized in that**
the first flank (13) and the second flank (14) enclose an angle (ε) between 40° and 50°, in particular 45°, at the peak (15) of the sealing protrusion (12) and/or that the first flank (13) has at least one radius (R2), and that the second flank (14) has at least one radius (R3).

5. Pipe (2) according to claim 3 or 4,
**characterized in that**
the first flank (13) is convex and/or the second flank (14) is concavely curved.

6. Pipe (2) according to one of claims 1 to 5,
**characterized in that**
the sealing protrusion (12) has a height between 0.3 mm and 0.5 mm and/or a width at its base between 0.5 mm and 0.9 mm.

7. Pipe (2) according to one of claims 3 to 6,
**characterized in that**
the first flank (13) merges continuously into the sealing surface (7).

8. Pipe (2) according to one of claims 1 to 7,
**characterized in that**
the end face (6) is inclined at an angle of between 50° and 90° to the longitudinal axis A of the pipe (2), in particular at an angle of between 65° and 75°, particularly preferably of about 70°, and/or **in that** the sealing protrusion (12) is produced by plastic deformation of the pipe (2), in particular by plastic deformation by the action of force on the end face (6) and the sealing face (7) of the pipe (2).

9. Pipe (2) according to one of claims 1 to 8,
**characterized in that**
the sealing surface (7) has at least one smooth area whose surface roughness is less than the surface roughness in at least one area of the sealing surface (7) adjacent to the smooth area.

10. Pipe (2) according to claim 9,
**characterized in that**
the surface roughness is determined on the basis of an arithmetic mean roughness (Ra) and a profile depth (Pt), and **in that**, as a result of the forming, a force action takes place in the smooth area such that the arithmetic mean roughness (Ra) and the profile depth (Pt) are reduced by at least 50%, in particular by at least 75%, with respect to the initial values in the smooth area.

11. Pipe (2) according to one of claims 3 to 10,
**characterized in that**
the peak (15) of the sealing protrusion (12) has a diameter corresponding to 88% to 99% of the outer diameter of the pipe, in particular 91% to 98%.

12. Pipe coupling (1) for connecting a pipe (2), comprising a pipe (2) according to one of claims 1 to 11, a connecting union (3) and a clamping element (4), the connecting union (3) having a receiving section (8) for receiving at least part of the connecting section (5),
**characterized in that**
a sealing connection can be made between the pipe (2) and the connecting union (3) by clamping the connecting section (5) between the connecting union (3) and the clamping element (4).

13. Pipe coupling (1) according to claim 12,
**characterized in that**
the pipe union (3) has an opposing sealing surface (16) in the receiving section (8), **in that** the opposing sealing surface (16) has at least one first section (16a) inclined by an angle (β) in the shape of a truncated cone, **in that** the opposing sealing surface (16) has at least one second section (16b) and **in that** the second section (16b) of the opposing sealing surface (16) is shaped to correspond to the second section (7b) of the sealing surface (7), and/or **in that** the pipe union (3) has a stop surface (17) in the longitudinal direction, and **in that** the sealing protrusion (12) bears against the stop surface (17) in the assembled state of the pipe coupling (1).

14. Swaging tool (18) for making a connecting section (5) on a pipe (2) according to one of claims 1 to 11, comprising at least one die (19) and at least one counterholder (20), forming die (19) a recess (21), and forming die (21) an inclined outer molding surface. (22) and an inclined bottom surface (23),
**characterized in that**
a recess (24) is formed in the edge region of the bottom surface (23) for forming a sealing protrusion (12) on the pipe (2) during the manufacturing process of a connecting section (5) by deforming the material of the pipe (2) at least partially into the recess (24) of the die (19).

15. Swaging tool (18) according to claim 14,
**characterized in that**
the outer molding surface (22) and the bottom surface (23) enclose an angle (σ) of less than 120 ° in the region of the recess (24), in particular less than 75°, preferably less than 50°.

16. Swaging tool (18) according to claim 14 or 15,
**characterized in that**
the outer molding surface (22) comprises at least a first section (22a), that the first section (22a) is inclined by an angle (γ), that the outer molding surface (22) comprises at least a second section (22b), **in that** the second section (22b) has at least one radius (R4), and/or **in that** the bottom surface (23) has a first section (23a), **in that** the first section (23a) is inclined by an angle (δ), **in that** the bottom surface (23) has a second section (23b), and **in that** the second section (23b) has at least one radius (R5).

17. Swaging tool (18) according to one of claims 14 to 16,
**characterized in that**
the forming die (19) is divisible at least at the low point (25) of the recess (24) between the outer molding surface (22) and the bottom surface (23).

18. Process (29) for producing a connecting section (5) on a pipe (2), the pipe (2) being held (30) by a counterholder (20), the pipe (2) being pressed with an end zone into the die (19) by an axial relative motion (31) between the counterholder (20) and the die (19),
**characterized in that**
a connecting section (5) with a sealing protrusion (12) having the features of a sealing protrusion (12) according to at least one claim of claims 1 to 11 is formed by force action of the die (19) on the abutting face (6) of the pipe (2) and an outer circumferential face of the pipe (2).

19. Process (29) according to claim 18,
**characterized in that**
the die (19) has an inclined bottom surface (23), and **in that** the relative axial motion from the bottom surface (23) causes a force on the end face (6) in the direction of the outer circumferential surface of the pipe (2).

## Revendications

1. Conduite tubulaire (2), comprenant au moins une section de liaison (5) et une surface frontale d'extrémité (6), la section de liaison (5) étant réalisée dans une zone d'extrémité de la conduite tubulaire (2), la surface frontale (6) présentant une saillie d'étanchéité (12), et la saillie d'étanchéité (12) étant réalisée sous la forme d'une élévation avec un premier et un deuxième flanc (13, 14) dans la surface frontale (6), la section de liaison (5) présentant au moins une surface d'étanchéité (7) inclinée en direction de la zone d'extrémité,
**caractérisée en ce que**
la saillie d'étanchéité (12) est réalisée dans une zone de bord de la surface frontale (6), de telle sorte qu'au moins un de ses flancs (13, 14) se raccorde directement à la surface d'étanchéité inclinée (7) de la section de liaison (5).

2. Conduite tubulaire (2) selon la revendication 1,
**caractérisée en ce que**
la surface d'étanchéité (7) comprend au moins une première section (7a) qui est inclinée en forme de tronc de cône d'un angle (α), **en ce que** la surface d'étanchéité (7) présente au moins une deuxième section (7b) qui se raccorde à la première section (7a) en direction de la zone d'extrémité, et **en ce que** la deuxième section (7b) présente au moins un rayon (R1).

3. Conduite tubulaire (2) selon la revendication 1 ou 2,
**caractérisée en ce que**
le premier flanc (13) et le deuxième flanc (14) se rapprochent l'un de l'autre en direction d'un point de pointe (15) de la saillie d'étanchéité (12), de préférence **en ce que** le premier flanc (13) et le deuxième flanc (14) forment sur toute la hauteur de la saillie d'étanchéité (12) un angle (ε) inférieur à 120°, notamment inférieur à 75°, de préférence inférieur à 50°.

4. Conduite tubulaire (2) selon la revendication 3,
**caractérisée en ce que**
le premier flanc (13) et le deuxième flanc (14) forment un angle (ε) compris entre 40° et 50°, notamment 45°, au point de pointe (15) de la saillie d'étanchéité (12) et/ou **en ce que** le premier flanc (13) présente au moins un rayon (R2), et **en ce que** le deuxième flanc (14) présente au moins un rayon (R3).

5. Conduite tubulaire (2) selon la revendication 3 ou 4,
**caractérisée en ce que**
le premier flanc (13) est incurvé de manière convexe et/ou le deuxième flanc (14) est incurvé de manière concave.

6. Conduite tubulaire (2) selon l'une quelconque des revendications 1 à 5,
**caractérisée en ce que**
la saillie d'étanchéité (12) présente une hauteur comprise entre 0,3 mm et 0,5 mm et/ou une largeur à sa base comprise entre 0,5 mm et 0,9 mm.

7. Conduite tubulaire (2) selon l'une quelconque des revendications 3 à 6,
**caractérisée en ce que**
le premier flanc (13) se raccorde de manière continue à la surface d'étanchéité (7).

8. Conduite tubulaire (2) selon l'une quelconque des revendications 1 à 7,
**caractérisée en ce que**
la surface frontale (6) est inclinée d'un angle compris entre 50° et 90° par rapport à l'axe longitudinal A de la conduite tubulaire (2), notamment d'un angle compris entre 65° et 75°, de manière particulièrement préférée d'environ 70°, et/ou **en ce que** la saillie d'étanchéité (12) est fabriquée par déformation plastique de la conduite tubulaire (2), notamment par déformation plastique par l'action d'une force sur la surface frontale (6) et la surface d'étanchéité (7) de la conduite tubulaire (2).

9. Conduite tubulaire (2) selon l'une quelconque des revendications 1 à 8,
**caractérisée en ce que**
la surface d'étanchéité (7) présente au moins une zone lisse dont la rugosité de surface est inférieure à la rugosité de surface dans au moins une zone de la surface d'étanchéité (7) adjacente à la zone lisse.

10. Conduite tubulaire (2) selon la revendication 9,
**caractérisée en ce que**
la rugosité de surface est déterminée à l'aide d'une rugosité moyenne arithmétique (Ra) et d'une profondeur de profil (Pt), et **en ce que** la déformation produit une action de force telle dans la zone lisse que la rugosité moyenne arithmétique (Ra) et la profondeur de profil (Pt) sont réduites d'au moins 50 %, notamment d'au moins 75 %, par rapport aux valeurs initiales dans la zone lisse.

11. Conduite tubulaire (2) selon l'une quelconque des revendications 3 à 10,
**caractérisée en ce que**
le point de pointe (15) de la saillie d'étanchéité (12) présente un diamètre qui correspond à 88 % à 99 % du diamètre extérieur de la conduite tubulaire, notamment à 91 % à 98 %.

12. Liaison de tubes (1) pour le raccordement d'une conduite tubulaire (2), comprenant une conduite tubulaire (2) selon l'une quelconque des revendications 1 à 11, un embout de raccordement (3) et un élément de serrage (4), l'embout de raccordement (3) présentant une section de réception (8) pour recevoir au moins une partie de la section de liaison (5),
**caractérisée en ce que**
une liaison étanche peut être établie entre la conduite tubulaire (2) et la tubulure de raccordement (3) en serrant la section de liaison (5) entre l'embout de raccordement (3) et l'élément de serrage (4).

13. Liaison de tubes (1) selon la revendication 12,
**caractérisée en ce que**
l'embout de raccordement (3) présente une surface d'étanchéité antagoniste (16) dans la section de réception (8), **en ce que** la surface d'étanchéité antagoniste (16) présente au moins une première section (16a) inclinée en forme de tronc de cône d'un angle (β), **en ce que** la surface d'étanchéité antagoniste (16) présente au moins une deuxième section (16b), et **en ce que** la deuxième section (16b) de la surface d'étanchéité antagoniste (16) est formée de manière à correspondre à la deuxième section (7b) de la surface d'étanchéité (7), et/ou **en ce que** l'embout de raccordement (3) présente une surface de butée (17) dans la direction longitudinale, et **en ce que** la saillie d'étanchéité (12), à l'état de montage de la liaison de tubes (1), s'applique contre la surface de butée (17).

14. Outil de compression (18) pour la fabrication d'une section de liaison (5) sur une conduite tubulaire (2) selon l'une quelconque des revendications 1 à 11, comprenant au moins une matrice (19) et au moins un contre-appui (20), la matrice (19) présentant un évidement (21), et l'évidement (21) présentant une surface de formage extérieure inclinée (22) et une surface de fond inclinée (23),
**caractérisé en ce que**
un creux (24) est réalisé dans la zone de bord de la surface de fond (23) pour former une saillie d'étanchéité (12) sur la conduite tubulaire (2) pendant l'opération de fabrication d'une section de liaison (5), en déformant le matériau de la conduite tubulaire (2) au moins partiellement dans le creux (24) de la matrice (19).

15. Outil de compression (18) selon la revendication 14,
**caractérisé en ce que**
la surface de formage extérieure (22) et la surface de fond (23) forment dans la zone du creux (24) un angle (σ) inférieur à 120°, notamment inférieur à 75°, de préférence inférieur à 50°.

16. Outil de compression (18) selon la revendication 14 ou 15,
**caractérisé en ce que**
la surface de formage extérieure (22) présente au moins une première section (22a), **en ce que** la première section (22a) est inclinée d'un angle (γ), **en ce que** la surface de formage extérieure (22) présente au moins une deuxième section (22b), **en ce que** la deuxième section (22b) présente au moins un rayon (R4) et/ou **en ce que** la surface de fond (23) présente une première section (23a), **en ce que** la première section (23a) est inclinée d'un angle (5), **en ce que** la surface de fond (23) présente une deuxième section (23b), et **en ce que** la deuxième section (23b) présente au moins un rayon (R5).

17. Outil de compression (18) selon l'une quelconque des revendications 14 à 16,
**caractérisé en ce que**
la matrice (19) est divisible au moins au point bas (25) du creux (24) entre la surface de formage extérieure (22) et la surface de fond (23).

18. Procédé (29) de fabrication d'une section de liaison (5) sur une conduite tubulaire (2), la conduite tubulaire (2) étant maintenue (30) par un contre-appui (20), la conduite tubulaire (2) étant pressée par une zone d'extrémité dans la matrice (19) par un mouvement axial relatif (31) entre le contre-appui (20) et la matrice (19),
**caractérisé en ce que**
par l'action de la force de la matrice (19) sur la surface frontale (6) de la conduite tubulaire (2) et sur une surface périphérique extérieure de la conduite tubulaire (2), une section de liaison (5) avec une saillie d'étanchéité (12) est réalisée, ayant les caractéristiques d'une saillie d'étanchéité (12) selon au moins une revendication des revendications 1 à 11.

19. Procédé (29) selon la revendication 18,
**caractérisé en ce que**
la matrice (19) présente une surface de fond inclinée (23), et **en ce que** le mouvement axial relatif de la surface de fond (23) provoque une force sur la surface frontale (6) en direction de la surface périphérique extérieure de la conduite tubulaire (2).
